# EUROPÄISCHE PATENTSCHRIFT

(11) **EP 1 459 797 B1**
(45) Veröffentlichungstag und Bekanntmachung des Hinweises auf die Patenterteilung: **18.11.2009**
(21) Anmeldenummer: 04006160.8
(22) Anmeldetag: 16.03.2004
(51) Int. Cl.: B01D 53/04

(54) **Redundantes Verfahren zur Gasreinigung**
Redundant method for gas purification
Procédé de purification de gaz redondant

(30) Priorität: 20.03.2003 DE 10312528
(43) Veröffentlichungstag der Anmeldung: 22.09.2004
(73) Patentinhaber: Linde Nippon Sanso GmbH & Co KG, 47805 Krefeld (DE)
(72) Erfinder: Ritterbach, Frank, 41462 Neuss (DE); Arnold, Peter, 47259 Duisburg (DE)
(74) Vertreter: Kasseckert, Rainer

(56) Entgegenhaltungen:
- EP-A- 1 101 732
- US-A- 3 105 360
- US-A- 3 355 860
- US-A- 3 527 024
- US-A- 3 713 272
- US-A- 5 298 054

## Beschreibung

Die Erfindung betrifft ein Verfahren zur kontinuierlichen Reinigung eines Gases mittels Reinigungssäulen (Filter).

Bekannt sind Gasreinigungssysteme für Inertgase (N2, Ar, He). Der Reinigungsprozess erfolgt katalytisch, reaktiv - adsorptiv. Typisch ist ein kontinuierlich arbeitender Katalysator als erste Reinigungsstufe zur Methan bzw. Kohlenwasserstoffentfernung. Der nächste Reinigungsschritt (reaktiv - adsorptive) beinhaltet immer einen Wechselvorgang zwischen zwei Säulen (Behältern). Eine, welche die Reinigung duchführt und die zweite welche regeneriert wird, die bei Beladung der ersten durch Umschaltung die Reinigungsaufgabe übernimmt (u.s.w.).

Ebenso gibt es Gasreinigungssysteme für Inertgase (N2, Ar, He) ohne eine katalytische Vorreinigungsstufe. Die Reinigung (reaktiv - adsorptive) beinhaltet ebenso hier immer einen Wechselvorgang zwischen zwei Säulen (Behältern). Eine, welche die Reinigung ausführt und die zweite welche regeneriert wird, die bei Beladung der ersten Säule durch Umschaltung die Reinigungsaufgabe übernimmt (u.s.w.).

Bekannt sind ferner Gasreinigungssysteme für Sauerstoff. Der Reinigungsprozess erfolgt katalytisch, adsorptiv. Typisch ist ein kontinuierlich arbeitender Katalysator als erste Reinigungsstufe zur Methan bzw. Kohlenwasserstoffentfernung. Der nächste Reinigungsschritt (adsorptiv) beinhaltet immer einen Wechselvorgang zwischen zwei Säulen (Behältern). Eine, welche die Reinigung ausführt und die zweite Säule, welche regeneriert wird, die bei Beladung der ersten Säule durch Umschaltung die Reinigungsaufgabe übernimmt (u.s.w.).

Zur Erhöhung der Versorgungssicherheit werden häufig solche Systeme parallel installiert (z.B. zwei baugleiche Reiniger) um Redundanz zu erzielen. Das heißt doppelte Gerätekosten, doppelter Aufstellplatz, doppelte Anschlussarbeiten, doppelter Energieverbrauch etc.

Der Erfindung liegt die Aufgabe zugrunde, den Betrieb kontinuierlicher Gasreinigungssysteme zu verbessern.

Gelöst wurde die Aufgabe durch ein Verfahren mit den in Anspruch 1 beschriebenen Merkmalen.

Das Gasreinigungssystem enthält drei Gasreinigungsstufen, z.B. Gasreinigungssäulen (z.B. Adsorber oder Absorber), und keine weiteren Gasreinigungsstufen. Die Gasreinigungsstufen sind für einen kontinuierlichen Einsatz mit Wechsel als Reinigungseinheit, als zu regenerierende Einheit und als Ersatz-Einheit (Stand-by-Einheit) vorgesehen und entsprechend verschaltet. In der Regel sind die Gasreinigungsstufen parallel angeordnet. Das Gasreinigungssystem enthält vorzugsweise steuerbare Ventile. Das Gasreinigungssystem enthält vorteilhaft eine Steuereinheit.

Das Gasreinigungssystem dient zur kontinuierlichen Reinigung eines Gases oder zur Herstellung eines Reingases oder eines hochreinen Gases. Zu reinigende Gase sind z.B. Inertgase wie Stickstoff, Reaktivgase wie Sauerstoff. Die drei Reinigungsstufen sind in der Regel so verschaltet, dass das zu reinigende Gas nur durch eine der drei Reinigungsstufen geleitet wird und ohne Unterbrechung oder Umbaumaßnahmen auf eine andere der drei Reinigungsstufen der Gasfluß gewechselt werden kann. Die drei Reinigungsstufen werden jeweils als Reinigungsstufe, Regenerierstufe und Ersatzstufe betrieben, wobei die Reihenfolge und/oder die Verschaltung je nach Erfordernis, z.B. bei einer Störung, geändert werden kann.

Das Gasreinigungssystem ist z.B. ein manuell, semi-automatisch und vollautomatisch arbeitendes System.

Das Gasreinigungssystem mit den drei Gasreinigungsstufen bildet ein sehr effektives redundantes System, das zu folgenden Vorteilen führt:
- Reduzierung des benötigten Aufstellplatzes um ca. 1/3-tel
- Reduzierung des Installationsaufwandes um 50%
- Reduzierung des Stromverbrauches bis zu 50%
- Integration einer Filterredundanz im System Gasreiniger

Die Erfindung wird anhand der Zeichnung erläutert.
Fig. 1 zeigt ein Schema eines Gasreinigungssystems mit drei Gasreinigungssäulen.
Fig. 2 zeigt schematisch die Verfahrenabläufe des Gasreinigungssystems.
Fig. 3 zeigt ein Beispiel eines Gasreinigungssystems für Inertgas ohne Katalysatorstufe.
Fig. 4 zeigt ein Beispiel eines Gasreinigungssystems für Inertgas mit Katalysatorstufe.
Fig. 5 zeigt ein Beispiel eines Gasreinigungssystems für Sauerstoff mit Katalysatorstufe.

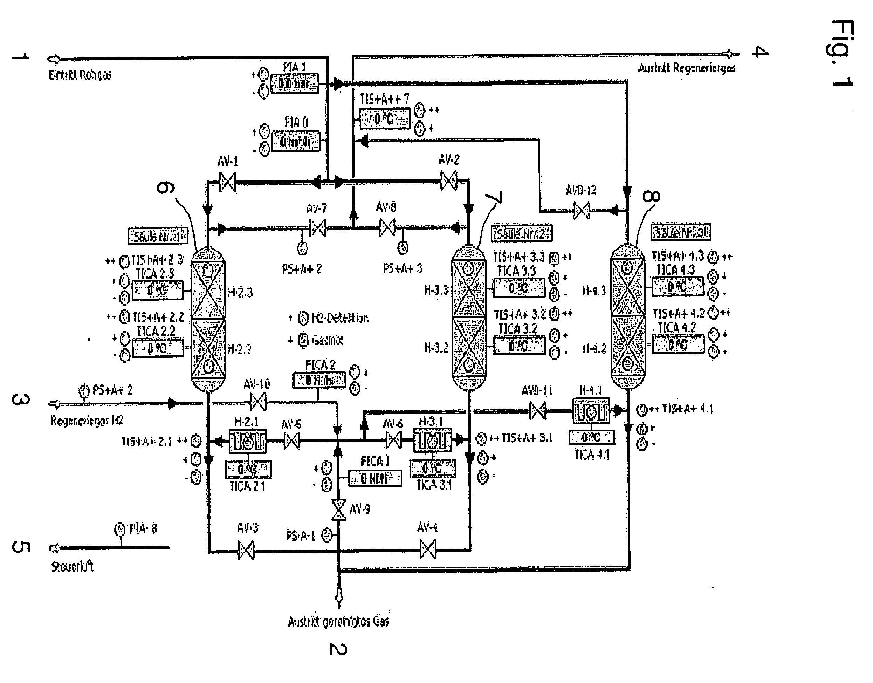

Das in Fig. 1 abgebildete Beispiel eines Gasreinigungssystem ist ein redundantes System mit drei Gasreinigungsstufen. Es besteht aus den drei Gasreinigungssäulen Nr. 1, 2 und 3 (Bezugszeichen 6, 7 und 8), den Gasleitungen, Ventilen (in der Regel steuerbare Ventile, z.B. Pneumatikventile) und weiteren Zubehörteilen wie Gasversorgung, Steuereinheit, Steuerleitungen. Die Gasreinigungssäulen werden im Wechsel von Betrieb als Gasreiniger, von Regeneration und von Betrieb als Ersatz ("Stand by") betrieben. Der jeweilige Zustand einer Gasreinigungssäule ist mit dem Zustand der anderen Gasreinigungssäulen abgestimmt. Das Gasreinigungssystem wird beispielsweise zur kontinuierlichen Bereitstellung von reinsten Gasen bei der Herstellung von Halbleiter-Chips eingesetzt. Hier ist die Redundanz des Gasreinigungssystems von besonderer Bedeutung.

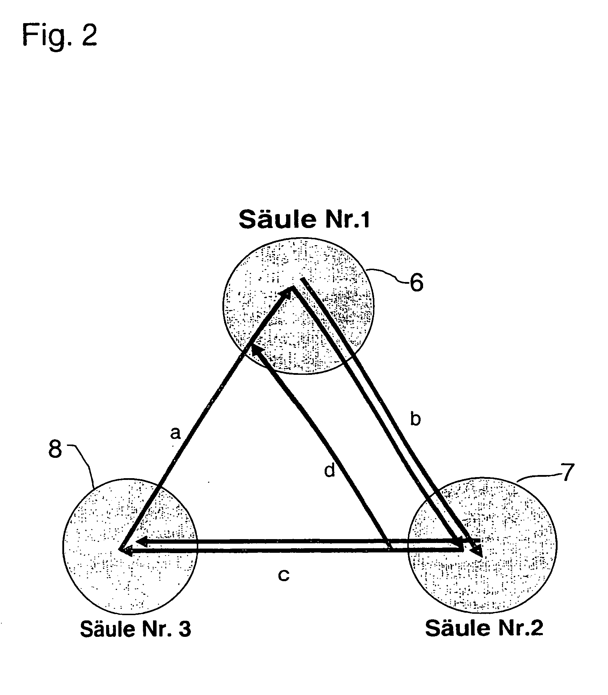

Anhand von Fig. 2 wird der Verfahrensablauf und die möglichen Verfahrenschritte in dem redundanten Gasreinigungssystem mit drei Gasreinigungssäulen 6, 7, 8 erläutert. In dem kontinuierlich arbeitenden Gasreinigungssystem ist jede drei Gasreinigungsstufen (Säulen 6, 7, 8) wechselweise als Gasreinigungsstufe oder Gasreinigungssäule, als Regenerierungsstufe (zur Regenierung der verbrauchten Gasreinigungssäule) und als Ersatzstufe (neue, unverbrauchte oder regenerierte Gasreinigungsstufe) vorgesehen. In dem Gasreinigungssystem sind getrennte Gaswege für das zu reinigende/gereinigte Gas und das Regeneriergas (z.B. Wasserstoff) über Ventile (z.B. steuerbare Ventile wie Pneumatik- oder Magnetventile) einstellbar. Bei dem ungestörten Betrieb des Gasreinigungssystems werden die drei Gasreinigungsstufen in einem Zyklus gefahren, in dem jede Gasreinigungssäule nacheinander die Funktionen Reinigungssäule, Regenierungssäule und Ersatzsäule durchläuft. In einer ersten Phase des Zyklus ist beispielsweise Säule 1 (6) als Reinigungsstufe, Säule 2 (7) als Regenerierungssstufe und Säule 3 (8) als Ersatzstufe geschaltet. In der nachfolgenden Phase wird z.B. Säule 1 (6) als Regenerierungssstufe, Säule 2 (7) als Ersatzstufe und Säule 3 (8) als Reinigungsstufe geschaltet. In der letzten Phase wird z.B. Säule 1 (6) als Ersatzstufe, Säule 2 (7) als Reinigungsstufe und Säule 3 (8) als Regenerierungssstufe geschaltet. Danach beginnt ein neuer Zyklus. Eine Phase läuft z.B. über 168 Stunden. Daraus ergibt sich eine Gesamtzeit eines Zyklus von 504 Stunden (bei ungestörtem Betrieb, Zyklus über Wege a, b, c).

Bei einer Störung bei einer Säule, z.B. bei Säule Nr. 3 (8), wird umgeschaltet auf einen kontinuierlichen Betrieb zwischen Säule 1 (6) und Säule 2 (7), das heißt bei einer Störung im Bereich einer Säule oder Stufe wird auf einen Zyklus zwischen zwei ungestörten Säulen, im Beispiel Säule 1 (6) und Säule (7), übergegangen (in Fig. 2, Wege b, d). Das Gasreinigungssystem wird in diesem Fall wie ein übliches System mit zwei Stufen (Reinigung im Wechsel mit Regenerierung) betrieben. Die Gesamtzeit des Zyklus beträgt nun zwei mal 168 Stunden, also insgesamt 336 Stunden. Nach Beseitigung der Störung bei Säule Nr. 3 (8) ist die Redundanz des Systems wieder hergestellt. Der zyklische Betrieb zwischen drei Säulen wird wieder aufgenommen.

Im Falle einer Störung im Gesamtsystem, z.B. der Ausfall einer gemeinsamen Einheit oder einer übergeordneten Einheit oder Baugruppe (z.B. Ausfall der Regeneriergas-Versorgung für die Regenerierung oder Ausfall eines Durchflußreglers), wobei die Säulen (6,7,8) bzw. Reinigungsstufen selbst keine Fehler aufweisen, wird jede Stufe nur als Reinigungsstufe eingesetzt und zwischen diesen Stufen gewechselt. Bei einer angenommenen Reinigungskapazität einer Säule von 168 Stunden wird durch das Weiterschalten über 3 Stufen Zeit für die Reparatur des Systems gewonnen, nämlich 312 Stunden (2 x 168 h - 1 x T_{Regeneration} = 312 h Tₘₐₓ ). Hier führt die Redundanz zu einem Zeitgewinn von 312 Stunden oder 13 Tagen, der bereit steht, um den Fehler zu finden und zu beseitigen.

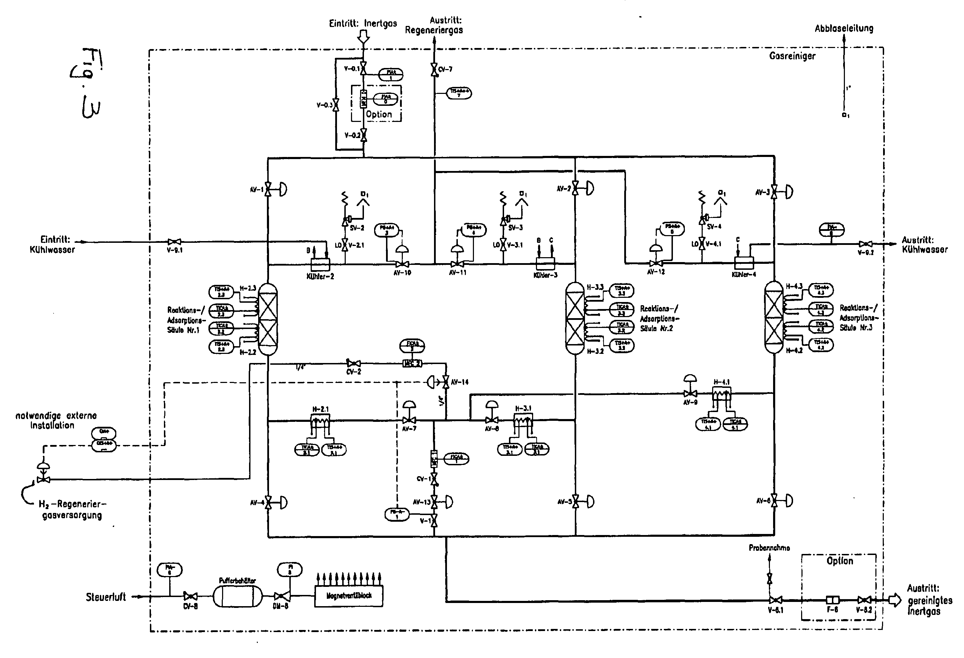

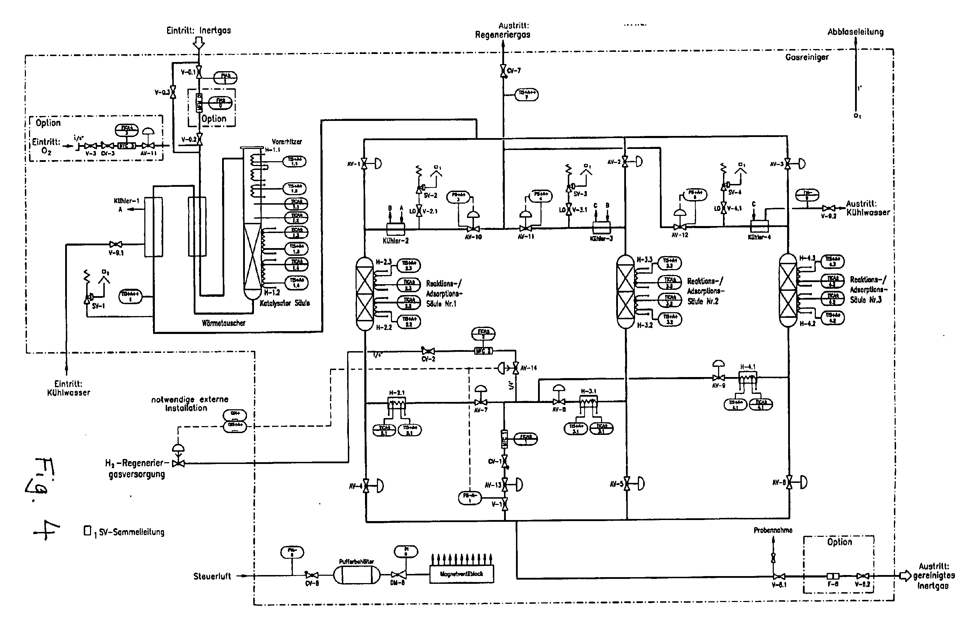

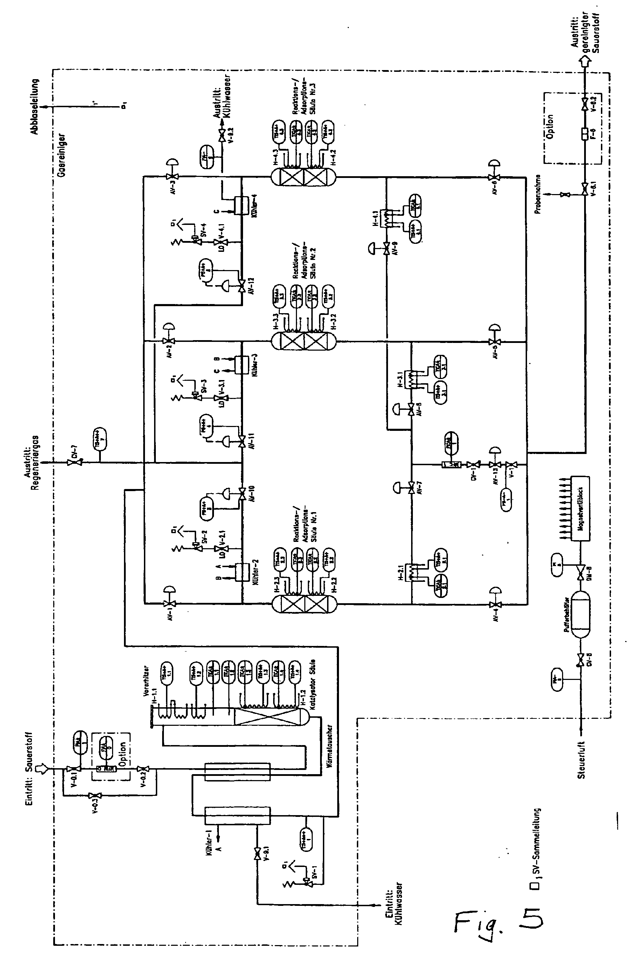

Die Schemata in Fig. 3 - Fig. 5 zeigen konkrete Beispiele der Systeme für Inertgas-Reiniger mit (Fig. 3) und ohne (Fig. 4) Katalysatorstufe als auch Sauerstoff-Reiniger (Fig. 5), ausgeführt als redundante Gasreinigungssysteme mit drei Reinigungsstufen oder Reinigungssäulen.

Alle Gasreinigungssysteme sind so konzipiert, dass eine vergleichbare Redundanz erzielt wird ohne den Einsatz eines zweiten, üblichen Systems (aus Reinigungsstufe und Regenerierungsstufe). Im Einzelnen bedeutet dies:
- Die kontinuierlich arbeitende Katalysatorstufe ist mit einem redundanten Heizsystem ausgestattet
- Die kontinuierlich arbeitende Katalysatorstufe ist mit einem elektrischen Vorerhitzer ausgestattet, der eine Redundanzstruktur besitzt (Zwei Temperatursensoren zur getrennten Temperaturreglung, zwei Temperatursensoren zur getrennten Temperaturbegrenzung sowie eines Vorerhitzers mit Redundanten Heizelementen in der Form 2 x 100% bzw. 3 x 50%.

Sensoren sind austauschbar ohne Unterbrechung des Reinigungsprozesse (z.B.: Eingangsdurchflussmessung durch by pass-Armaturen).

Die folgende Reinigungsstufe (reaktiv - adsobtive im Falle der Inertgasreiniger, Fig.3 und 4 bzw. adsobtiv im Falle der Sauerstoffreiniger, Fig. 5 ) beinhaltet für die Reinigung und den Wechselvorgang drei Säulen (Behälter). Eine, welche die Reinigung vollführt, die Zweite welche regeneriert ist (also schon "stand by" ist) und die Dritte welche regeneriert wird. Im Falle eines Fehlers an einer der drei Säulen, wird diese aus dem Dreier-Zyklus herausgenommen. Die beiden übrig bleibenden Säulen arbeiten nun wie ein "typischer" Reiniger weiter (Redundanz!). Im Falle eines Fehlers an zentralen Funktionseinheiten (z.B.: Durchflussregler MFC 2) wird die Zeit zur Behebung des Fehlers (ebenso Restzeit der sicheren Medienversorgung) um mehr als 100% erhöht.

### Bezugszeichen

- 1: Gaseingang des zu reinigenden Gases
- 2: Gasausgang des gereinigten Gases
- 3: Gaseingang von Regeneriergas (z.B. Wasserstoff)
- 4: Gasausgang von Regeneriergas
- 5: Steuerluft
- 6: Säule Nr. 1
- 7: Säule Nr. 2
- 8: Säule Nr. 3

## Patentansprüche

1. Verfahren zur Reinigung eines Gases in einem Gasreinigungssystem mit drei Reinigungsstufen (6, 7, 8), die so verschaltet sind, dass das Gas nur durch eine der drei Reinigungsstufen geleitet wird und ohne Unterbrechung oder Umbaumassnahmen auf eine andere der drei Reinigungsstufen (6, 7, 8) der Gasfluss gewechselt werden kann, **dadurch gekennzeichnet, dass** die drei Reinigungsstufen in einem Zyklus gefahren werden, in dem jede der Reinigungsstufen nacheinander die Funktionen Gasreinigungsbetrieb., Säulenregenerierung und Ersatzbetrieb durchläuft.

2. Verfahren nach Anspruch 1, **dadurch gekennzeichnet, dass** die Reinigungsstufen (6, 7, 8) als Gasreinigungssäulen oder Gasfiltersäulen ausgebildet sind.

3. Verfahren nach einem der Ansprüche 1 oder 2, **dadurch gekennzeichnet, dass** das Gasreinigungssystem neben den drei Reinigungsstufen (6, 7, 8) keine weiteren Reinigungsstufen enthält.

4. Verfahren nach einem der Ansprüche 1 bis 3, **dadurch gekennzeichnet, dass** Reinstgase oder hochreine Gase hergestellt werden.

5. Verfahren nach einem der Ansprüche 1 bis 4, **dadurch gekennzeichnet, dass** bei einer Störung in einer der drei Reinigungsstufen die anderen beiden Reinigungsstufen in einem Zyklus gefahren werden, in dem die anderen beiden Reinigungsstufen nacheinander die Funktionen Gasreinigungsbetrieb und Säulenregenerierung durchlaufen.

## Claims

1. Method for purifying a gas in a gas purification system having three purification stages (6, 7, 8) which are connected in such a manner that the gas is passed through only one of the three purification stages and, without interruption or alterations, the gas flow can be changed to another of the three purification stages (6, 7, 8), **characterized in that** the three purification stages are operated in a cycle in which each of the purification stages successively passes through the functions gas purification operation, column regeneration and stand-by operation.

2. Method according to Claim 1, **characterized in that** the purification stages (6, 7, 8) are constructed as gas purification columns or gas filter columns.

3. Method according to either of Claims 1 and 2, **characterized in that** the gas purification system does not contain any further purification stages in addition to the three purification stages (6, 7, 8).

4. Method according to any one of Claims 1 to 3, **characterized in that** ultra-high purity or high purity gases are produced.

5. Method according to any one of Claims 1 to 4,
**characterized in that** in the event of a fault in one of the three purification stages the other two purification stages are operated in a cycle in which the other two purification stages successively pass through the functions gas purification operation and column regeneration.

## Revendications

1. Procédé d'épuration d'un gaz dans un système d'épuration de gaz qui présente trois étages d'épuration (6, 7, 8) raccordés de telle sorte que le gaz ne passe que par un seul des trois étages d'épuration et que l'écoulement de gaz puisse passer dans un autre des trois étages d'épuration (6, 7, 8) sans interruption ni disposition de transformation du système,
**caractérisé en ce que**
les trois étages d'épuration sont utilisés dans un cycle au cours duquel chacun des étages d'épuration traverse successivement les fonctions d'épuration du gaz, de régénération des colonnes et de remplacement.

2. Procédé selon la revendication 1, **caractérisé en ce que** les étages d'épuration (6, 7, 8) sont configurés comme colonnes d'épuration de gaz ou colonnes de filtration de gaz.

3. Procédé selon l'une des revendications 1 ou 2, **caractérisé en ce qu'**en plus des trois étages d'épuration (6, 7, 8), le système d'épuration de gaz ne contient aucun autre étage d'épuration.

4. Procédé selon l'une des revendications 1 à 3, **caractérisé en ce qu'**il permet d'obtenir des gaz très purs ou des gaz de haute pureté.

5. Procédé selon l'une des revendications 1 à 4, **caractérisé en ce qu'**en cas de perturbation dans l'un des trois étages d'épuration, les deux autres étages d'épuration sont utilisés dans un cycle au cours duquel les deux autres étages d'épuration exécutent successivement les fonctions d'épuration de gaz et de régénération de la colonne.
